Europäisches Patentamt

European Patent Office

Office européen des brevets

(19)

(11) Veröffentlichungsnummer: **0 175 142**
A2

(12) # EUROPÄISCHE PATENTANMELDUNG

(21) Anmeldenummer: 85110146.9

(22) Anmeldetag: 13.08.85

(51) Int. Cl.⁴: **G 01 N 21/21**

(30) Priorität: 20.09.84 DE 3434575

(43) Veröffentlichungstag der Anmeldung: 26.03.86
Patentblatt 86/13

(84) Benannte Vertragsstaaten: **AT BE CH FR GB IT LI NL SE**

(71) Anmelder: **SAGAX Instrument AB, Box 7003,
S-172 07 Sundbyberg (SE)**

(72) Erfinder: **Björk, Nils Arvid Norman, Kometvägen 17,
S-18333 Täby (SE)**
Erfinder: **Sandström, Erland Torbjörn, Muraregatan 13 B,
S-43134 Mölndal (SE)**
Erfinder: **Stenberg, Johan Emanuel, Hedelundsvägen 5,
S-41743 Göteborg (SE)**
Erfinder: **Stiblert, Lars Bertil, Övre Besvärsgatan 4,
S-411 29 Göteborg (SE)**

(74) Vertreter: **Patentanwälte Liedl, Nöth,
Steinsdorfstrasse 21-22, D-8000 München 22 (DE)**

(54) Ellipsometrische Vorrichtung zur Untersuchung der physikalischen Eigenschaften der Oberfläche einer Probe.

(57) Ein ellipsometrisches Verfahren und eine ellipsometrische Vorrichtung, bei denen zur Erhöhung der Meßgenauigkeit nach dem Prinzip der Vergleichsellipsometrie bei der Schichtdickenmessung die Referenzoberfläche in im wesentlichen zwei gleiche Flächenanteile mit zwei unterschiedlichen keilförmigen Oberflächenschichten, die zueinander parallel verlaufen, aufgeteilt ist.

## Ellipsometrische Vorrichtung zur Untersuchung der physikalischen Eigenschaften der Oberfläche einer Probe

Die Erfindung betrifft eine ellipsometrische Vorrichtung nach dem Oberbegriff des Anspruchs 1.

Eine ellipsometrische Vorrichtung ist aus der europäischen Patentschrift 19 088 bekannt. Mit dem bekannten Vergleichsellipsometer lassen sich physikalische Oberflächeneigenschaften, insbesondere Schichtdicken auf Probenoberflächen, direkt ohne Zuhilfenahme aufwendiger elektronischer Auswerteeinrichtungen in einem Okular ablesen. Es wird hierzu von einem Polarisator polarisiertes Licht an einer Referenzoberfläche mit bekannten Reflexionseigenschaften und einer zu untersuchenden Probenoberfläche mit gleichen Einfallswinkeln zur Reflexion gebracht, wobei die Referenzoberfläche und die Probenoberfläche mit ihren Einfallsebenen senkrecht zueinander stehen bzw. die Polarisationsrichtung der Strahlung zwischen den beiden Oberflächen um 90$^{\circ}$ gedreht wird. Wenn die Reflexionseigenschaften der Referenzoberfläche und der Probenoberfläche miteinander übereinstimmen, z. B. wenn eine auf der Probenoberfläche vorhandenen Schicht die gleiche Schichtdicke aufweist wie eine auf der Referenzoberfläche vorhandene Schicht, wird das Licht durch den Analysator gelöscht. Unter Verwendung einer Referenzoberfläche mit keilförmiger Schichtdicke und zugeordneter Ableseskala wird bei Schichtdickengleichheit mit einer bestimmten Stelle der keilförmigen Schichtdicke auf der Referenzoberfläche mit der Schicht auf der Probenoberfläche an einer bestimmten Stelle der Ableseskala im dem Analysator nachgeordneten Okular ein dunkler Meßstreifen sichtbar. Auf diese Weise lassen sich mit hoher Genauigkeit Schichtdicken von 2 nm bis zu 50 µm mit einer Genauigkeit von in vielen Fällen besser als ± 2 % messen.

Bei der bislang bekannten Vorrichtung sind einer Steigerung der Meßgenauigkeit dadurch Grenzen gesetzt, daß die Anzeige der gemessenen Schichtdicke im Okular als dunkler Meßstreifen in Erscheinung tritt, der einen bestimmten Bereich auf der Skala abdeckt.

Aufgabe der Erfindung ist es daher, bei dem bekannten Vergleichselipsometer die Meßgenauigkeit wesentlich zu erhöhen.

Diese Aufgabe wird nach der Erfindung durch die kennzeichnenden Merkmale des Anspruchs 1 gelöst.

- 4 -                    0175142

Die Unteransprüche kennzeichnen Weiterbildungen der Erfindung.

In vorteilhafter Weise ist bei der Erfindung bei der Schichtdickenmessung auf Probenoberflächen der Einsatz von flach verlaufenden keilförmigen Referenzschichtdicken auf der Referenzoberfläche möglich, z. B. im Bereich von 5 nm bis 500 nm. Derart flach keilförmig verlaufende Referenzschichtdicken würden in herkömmlicher Weise einen ziemlich breiten Löschungsstreifen bzw. Meßstreifen im Okular des Ellipsometers bilden, wodurch sich die Meßgenauigkeit nicht erhöhen läßt. Diese Schwierigkeit wird bei der Erfindung dadurch umgangen, daß unter Ausnutzung der Symetrie der Intensitätsverteilung zu beiden Seiten der Lösch- bzw. Extinktionsstreifen die Referenzoberfläche aufgeteilt ist in zwei unterschiedliche Reflexionseigenschaften aufweisenden Flächenanteile, deren Reflexionseigenschaften sich in einer bestimmten Richtung linear ändern, wobei diese Änderung für beide Flächenanteile der Referenzoberfläche prozentual gleich ist und in der gleichen Richtung verläuft. Bei der Schichtdickenmessung können hierzu keilförmige Referenschichtdicken für die beiden Flächenanteile der Referenzoberfläche verwendet werden, deren Verlauf parallel zueinander ist. Die Reflexionseigenschaften der beiden Flächenanteile sind so, daß sie im wesentlichen symmetrisch zu der Reflexionseigenschaft der Probe liegen. Durch den keilförmigen
Verlauf der Refernzschichtdicken in den beiden Flächenanteilen der Referenzoberfläche läßt sich ein bestimmter
Bereich abdecken, innerhalb welchem bestimmte Reflexionseigenschaften, insbesondere das Reflexionsverhalten an
Oberflächen beeinflussende Größen, wie beispielsweise die
Schichtdicke auf einer Probenoberfläche, gemessen werden
können.

Hierzu werden vom Analysator zwei Löschungsstreifen erzeugt, deren sich überlappende Randbereiche bzw. Graubereiche oder Grauzonen der Intensität in ihrem Überlappungsbereich eine im Okular deutlich wahrnehmende
scharf verlaufende Meßlinie für die Reflexionseigenschaft
der Probe, insbesondere der auf der Probenoberfläche befindlichen Schichtdicke, bilden.

Anhand der beiliegenden Figuren wird an Ausführungsbeispielen der Erfindung diese noch näher erläutert. Es
zeigt:

Fig. 1    schematisch den Intensitätsverlauf eines im
          Okular des Vergleichsellipsometers erscheinenden Meßstreifens;

Fig. 2        schematisch einen Querschnitt durch ein Ausführungsbeispiel der Referenzoberfläche;

Fig. 3        einen Querschnittsverlauf für ein weiteres
              Ausführungsbeispiel der Referenzoberfläche;

Fig. 4        eine Draufsicht auf die Referenzoberfläche
              der Fig. 2;

Fig. 5        eine Draufsicht auf die Referenzoberfläche
              der Fig. 3;

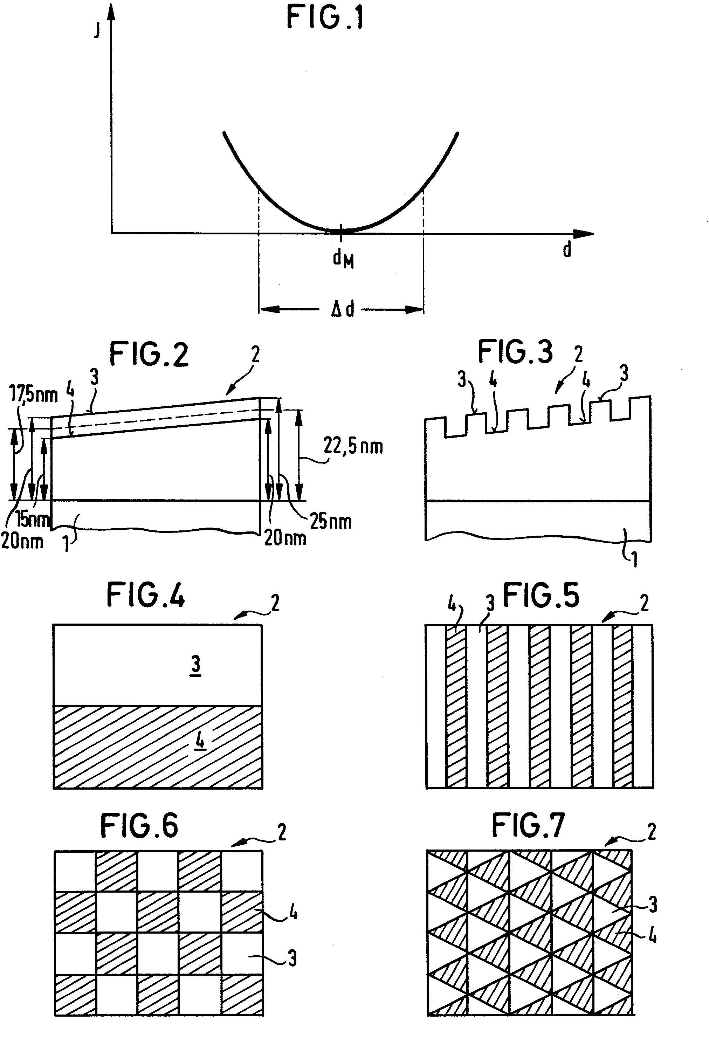

Fig. 6        eine Draufsicht auf ein weiteres Ausführungsbeispiel für die Referenzoberfläche;

Fig. 7        ein weiteres Ausführungsbeispiel für die
              Referenzoberfläche und

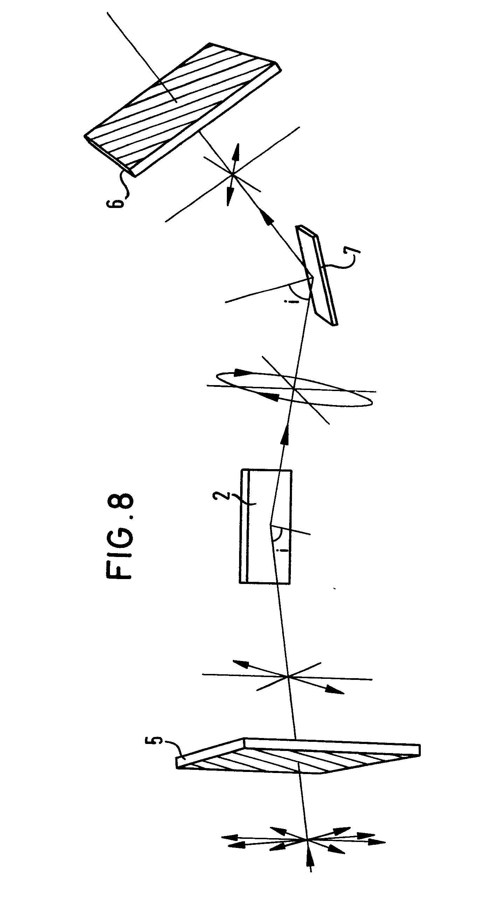

Fig. 8        in schematischer Darstellung ein Ausführungsbeispiel für ein Vergleichsellipsometer

Wie aus der Fig. 8 zu ersehen ist, wird eine einfallende parallele Strahlung in $-45^{\circ}$ mit Hilfe eines Polarisators 5 linear polarisiert. Diese polarisierte Strahlung trifft auf eine Referenzoberfläche 2 und wird von dieser reflektiert. Das von der Referenzoberfläche 2 reflektierte Licht ist elliptisch polarisiert in Abhängigkeit von der Art der Referenzoberfläche 2. Diese besitzt bestimmte das Reflexionverhalten beeinflussende Eigenschaften und kann die in den Figuren 2 bis 6 gezeigten Oberflächenformen aufweisen. Eine Probenoberfläche 7 ist so angeordnet, daß das Licht mit demselben Einfallswinkel i gegen die Probenoberfläche auftrifft wie gegen die Referenzoberfläche 2. Bei der dargestellten Ausführungsform sind die Referenzoberfläche 2 und die Probenoberfläche 7 so angeordnet, daß ihre Einfallsebenen senkrecht zueinander stehen. Hierdurch wird gewährleistet, daß die Polarisationsrichtung des Lichtes um $90^\circ$ gedreht ist, d. h. das Licht, welches die Probenoberfläche 7 verläßt, ist in $+45^\circ$ linear polarisiert.

Anstelle der in Fig. 8 gezeigten Anordnung der Referenzoberfläche 2 und der Probenoberfläche 7 ist es jedoch auch möglich, eine optische Komponente, z. B. ein Prisma, das die Polarisationsrichtung des Lichtes zwischen diesen beiden Oberflächen um $90^\circ$ dreht, einzusetzen.

Der Polarisator 5 und der Analysator 6 bleiben fest eingestellt und ihre Polarisationsrichtungen weisen zueinander einen rechten Winkel auf.

Wenn das Ellipsometer zur Schichtdickenmessung an den Probenoberflächen 7 verwendet wird, weist die Referenzoberfläche 2 zwei im wesentlichen gleiche Flächenanteile 3 und 4 (Figuren 2 bis 7) auf, die dadurch unterschiedliche Reflexionseigenschaften besitzen, daß auf einem Grundkörper 1 keilförmig verlaufende Schichten aufgebracht sind. Wie insbesondere aus dem Ausführungsbeispiel der Figuren 2 und 4 zu ersehen ist, ist auf der Oberfläche des Grundkörpers 1 die eine Hälfte der Oberfläche (Flächenanteil 4) mit einer Schicht bzw. mit einem Film beschichtet, dessen Schichtdicke keilförmig verläuft, wie das insbesondere aus der Fig. 2 zu ersehen ist. Desgleichen ist der Flächenanteil 3 mit einer Schicht bzw. mit einem Film beschichtet, die bzw. der ebenfalls einen keilförmigen Verlauf aufweist. Der Verlauf der beiden Schichtdicken ist parallel zueinander, wobei die Schicht auf dem Flächenanteil 3 dicker ist als auf dem Flächenanteil 4. Der Dickenunterschied beträgt entlang des gesamten Schichtdickenverlaufs beim dargestellten Ausführungsbeispiel 5 nm. Auf dem Flächenanteil 4 beginnt die Schichtdicke beim dargestellten Ausführungsbeispiel bei 15 nm und endet bei 20 nm. Auf dem Flächenanteil 3 beginnt die Schichtdicke bei 20 nm und endet bei 25 nm. Die beiden Schichten in den Flächenanteilen 3 und 4 bestehen aus einem Material mit gleicher Brechzahl,

beispielsweise aus $SiO_2$. Wenn eine derartig ausge- bildete Referenzoberfläche 2 mit einer Probenoberfläche in das Vergleichsellipsometer eingebracht wird, lassen sich Schichtdicken auf der Probenoberfläche genau bestimmen, wenn diese Schichtdicken innerhalb des Bereiches von 17,5 nm und 27,5 nm liegen. Für diesen Schichtdickenbereich auf der Probenoberfläche wird gewährleistet, daß durch die beiden Flächenanteile 3, 4 der Referenzoberfläche 2 zwei Löschungs- bzw. Extinktionsstreifen durch den Analysator 6 gebildet werden, deren Randteile bzw. Grauzonen sich überlappen und im Überlappungsbereich eine ziemlich scharfe Meßlinie bilden, die auf der Anzeigeskala den genauen Schichtdickenwert auf der Probenoberfläche 7 angibt.

Bei den dargestellten Ausführungsbeispielen der Figuren 2 bis 7 sind die Schichten auf den Flächenanteilen 3 und 4 der Referenzoberfläche 2 so bemessen, daß der niedrigste Schichtdickenwert der Schicht mit dem höheren Schichtdickenverlauf auf dem Flächenanteil 3 gleich ist dem höchsten Schichtdickenwert der Schicht mit dem niedrigeren Schichtdickenverlauf auf dem Flächenanteil 4. Unter Bezugnahme auf die Fig. 2 ist zu ersehen, daß beispielsweise der niedrigste Schichtdickenwert, der im Flächenanteil 3 befindlichen Schicht 20 nm beträgt, wobei dieser Wert gleich ist dem höchsten Schichtdickenwert (20 nm) der auf dem Flächenanteil 4 befindlichen Schicht. Als Unterschied zwischen den beiden parallel verlaufenden Schichtdickenverläufen auf den Flächenanteilen 3 und 4 sind beim dargestellten Ausführungsbeispiel 5 nm gewählt. Das bedeutet, daß mit dem dargestellten Ausführungsbeispiel Schichtdicken auf der Probenoberfläche genau bemessen werden können, die im Schichtdickenbereich von 17,5 nm bis 22,5 nm liegen.

Wie aus der Fig. 1 zu ersehen ist, besitzt die Löschungs- bzw. Extinktionslinie eine etwa parabelförmige Intensitätsverteilung, die zu beiden Seiten des Schwärzungsmaximums bei $d_M$, welches den idealen Meßwert für die zu messende Schichtdicke darstellt, einen im wesentlichen symmetrischen Verlauf aufweist. Bei der Erfindung wird der bei der Messung dünner Schichten zutagetretende Effekt ausgenützt, daß die Referenzschichtdicken auf der Referenzoberfläche 2 zu beiden Seiten dieses Schwärzungsmaximums liegen, und über ihren gesamten Bereich hin einen konstanten Abstand von $\triangle$ d aufweisen. Beim dargestellten Ausführungsbeispiel ist $\triangle$ d = 5 nm.

Wie schon erwähnt, wird beim Ausführungsbeispiel der Figuren 2 und 4 die Referenzoberfläche 2 gebildet durch zwei Hälften 3 und 4 mit den keilförmigen parallelen Schichtdickenverläufen, die sich um 5 nm unterscheiden. Beim Ausführungsbeispiel der Figuren 3 und 5 handelt es sich um ein streifenförmiges Raster, beim Ausführungsbeispiel der Fig. 6 um ein rechteckiges bzw. quadratisches Raster und beim Ausführungsbeispiel der Fig. 7 um einen Dreieckraster. Es ist natürlich auch möglich andere Rasterformen für die beiden Flächenanteile 3 und 4, auf denen die unterschiedlichen keilförmigen Schichtdicken der Referenzoberbläche vorgesehen sind, zu verwenden.

Bevorzugt kommt bei der Erfindung monochromatisches Licht zur Anwendung, weil dann eine einfarbige Intensitätsverteilung der beiden gewonnenen Meßstreifen erzielt wird, die in ihrem Überlappungsbereich eine Meßlinie mit scharfen Konturen bilden.

Dadurch, daß die Probe 7 bewegt werden kann, lassen sich örtliche Erhöhungen auf der Probenoberfläche feststellen. Solche Erhöhungen können beispielsweise bei biomolekularen Reaktionen, z. B. bei Antigen-Antikörperreaktionen entstehen.

Geringfügige Unsymmetrien der Intensitätsverteilung an den Löschungs- bzw. Extinktionsstreifen können durch eine entsprechende Verschiebung der Ableseskala, welche in Bezug gesetzt ist zu den keilförmigen Schichtdickenverläufen in den Flächenanteilen 3 und 4 der Referenzoberfläche 2, kompensiert werden.

Die bei der Erfindung erzielte Meßgenauigkeit liegt in der Größenordnung von 0,1 mm.

Bei den dargestellten Ausführungsbeispielen sind die Schichtdickenverläufe in den Flächenanteilen 3 und 4 der Referenzoberfläche 2 keilförmig ausgebildet. Es ist jedoch auch möglich, daß der Schichtdickenverlauf in jedem Flächenanteil 3 und 4 nicht geradlinig ausgebildet ist, sondern eine Kurvenform aufweist, wobei jedoch die beiden kurvenförmigen Verläufe der Flächenanteile 3 und 4 parallel zueinander sind, d. h. der Schichtdickenunterschied in den beiden Flächenanteilen 3 und 4 bleibt über die gesamte Referenzoberfläche 2 hin immer konstant.

Außerdem ist es möglich, eine Mehrfachanordnung der beiden Flächenanteile 3 und 4 auf der Referenzoberfläche 2 vorzusehen. Es ist dann möglich, an der Probe eine entsprechend große Anzahl an Oberflächenschichten mit unterschiedlichen Reflexionseigenschaften, insbesondere unterschiedlichen Schichtdicken, zu messen bzw. zu erfassen.

Patentansprüche

1. Ellipsometrische Vorrichtung zur Untersuchung der physikalischen Eigenschaften der Oberfläche einer Probe (7) oder einer bzw. eines auf einer Oberfläche vorhandenen Schicht oder Films, mit einem Polarisator (5), der polarisierte Strahlung auf zwei Oberflächen lenkt, von denen die eine eine Referenzoberfläche (2) mit in einer Richtung sich ändernder Reflexionseigenschaft und die andere eine zu untersuchende Probenoberfläche sind, und die so angeordnet sind, daß die Strahlung mit gleichen Einfallswinkeln und senkrecht zueinander liegenden Einfallsebenen bzw. um $90^\circ$ gedrehten Polarisationsrichtung zwischen den beiden Oberflächen zur Reflexion gebracht ist, und mit einem Analysator (6), der die - in Strahlungsrichtung gesehen - von der zweiten Oberfläche reflektierte Strahlung für den Strahlungsanteil, der den gleichen Polarisationszustand aufweist wie vor der ersten Reflexion, löscht, d a d u r c h g e k e n n z e i c h n e t , daß die Referenzoberfläche (2) zwei unterschiedliche Reflexionseigenschaften aufweisende Flächenanteile (3,4) aufweist, deren Reflexionseigenschaften etwa symmetrisch zu den zu bestimmenden bzw. ausgewählten Reflexionseigenschaften der Probe (7) liegen, an denen die Strahlung gleichzeitig zur Reflexion gebracht ist.

2. Vorrichtung nach Anspruch 1, d a d u r c h  g e - k e n n z e i c h n e t , daß die Reflexionseigenschaften der beiden Flächenanteile (3, 4) der Referenzoberfläche (2) so eingestellt sind, daß vom Analysator (6) um die Löschungsstreifen Flächenbereiche (Grauzonen) mit gleichen Intensitätsverlauf gebildet sind.

3. Vorrichtung nach Anspruch 1 oder 2, d a d u r c h  g e k e n n z e i c h n e t , daß vom Analysator (6) zwei Löschungsstreifen gebildet sind, deren sich überlappende Randbereiche (Grauzonen) in ihrem Überlappungs- bereich eine Meßlinie für die Reflexionseigenschaften der Probe (7) bilden.

4. Vorrichtung nach einem der Ansprüche 1 bis 3, d a - d u r c h  g e k e n n z e i c h n e t , daß der Re- flexionseigenschaftswert der Probenfläche zwischen den beiden Reflexionseigenschaftswerten der beiden Flächenanteile (3, 4) der Referenzfläche (2) liegt.

5. Vorrichtung nach einem der Ansprüche 1 bis 4, d a - d u r c h   g e k e n n z e i c h n e t , daß die Reflexionseigenschaften der Probenoberfläche (7) etwa Mittelwerte der Reflexionseigenschaften der beiden Flächenanteile (3, 4) der Referenzoberfläche (2) sind.

6. Vorrichtung nach einem der Ansprüche 1 bis 5, d a - d u r c h   g e k e n n z e i c h n e t , daß der Unterschied zwischen den Reflexionseigenschaften der beiden Flächenanteile (3, 4) der Referenzoberfläche (2) in der Änderungsrichtung gleich bleibt.

7. Vorrichtung nach einem der Ansprüche 1 bis 6, d a - d u r c h   g e k e n n z e i c h n e t , daß die Änderung der Reflexionseigenschaften der beiden Flächenanteile (3, 4) der Referenzoberfläche (2) linear verläuft.

8. Vorrichtung nach einem der Ansprüche 1 bis 7, d a - d u r c h   g e k e n n z e i c h n e t , daß die beiden Flächenanteile (3, 4) der Referenzoberfläche (2) unterschiedlich dicke Oberflächenschichten aufweisen, die zueinander parallel verlaufen.

9. Vorrichtung nach einem der Ansprüche 1 bis 6, d a - d u r c h   g e k e n n z e i c h n e t , daß die

- 17 -

0175142

Reflexionseigenschaften entlang den beiden Flächen
(3, 4 ) in gleicher Richtung eine prozentual gleiche
Änderung für beide Flächenanteile (3, 4) aufweisen.

10. Vorrichtung nach einem der Ansprüche 1 bis 9, d a -
d u r c h   g e k e n n z e i c h n e t , daß die
beiden Flächenanteile (3, 4) gebildet sind durch zwei
Flächenhälften der Referenzoberfläche (2).

11. Vorrichtung nach einem der Ansprüche 1 bis 9, d a -
d u r c h   g e k e n n z e i c h n e t , daß die
beiden Flächenanteile (3, 4) gebildet sind durch ein
streifenförmiges Raster (Fig. 4) mit den abwechselnden
beiden Reflexionseigenschaften.

12. Vorrichtung nach einem der Ansprüche 1 bis 9, d a -
d u r c h   g e k e n n z e i c h n e t , daß die
beiden Flächenanteile (3, 4) durch ein Rechteck (Fig.5)-
oder Dreieck (Fig.6)-Raster gebildet sind.

13. Vorrichtung nach einem der Ansprüche 1 bis 12, d a -
d u r c h   g e k e n n z e i c h n e t , daß die
beiden Flächenanteile (3, 4) im wesentlichen gleiche
Flächen aufweisen.

14. Vorrichtung nach einem der Ansprüche 1 bis 13, d a - d u r c h g e k e n n z e i c h n e t , daß die Probe (7) beweglich angeordnet ist.

15. Vorrichtung nach einem der Ansprüche 1 bis 14, d a - d u r c h g e k e n n z e i c h n e t , daß zum Ausgleich einer Unsymmetrie der Strahlungsintensitätsverteilung um die Strahlungslöschungsstreifen die Ableseskala entsprechend verschoben ist.

16. Vorrichtung nach einem der Ansprüche 1 bis 15, d a - d u r c h g e k e n n z e i c h n e t , daß die Abstände der Skalenteile voneinander zum Ausgleich einer Unsymmetrie der Strahlungsintensitätsverteilung um die Strahlungslöschungsstreifen entsprechend unterschiedlich bemessen sind.

17. Vorrichtung nach einem der Ansprüche 1 bis 16, d a - d u r c h g e k e n n z e i c h n e t , daß auf der Referenzoberfläche (2) der niedrigste Schichtdickenwert der keilförmigen Schicht auf dem Flächenanteil (3) mit dem höheren Schichtdickenverlauf gleich ist dem höchsten Schichtdickenwert der Schicht (auf dem Flächenanteil 4) mit dem niedrigeren Schichtdickenverlauf.

18. Vorrichtung nach einem der Ansprüche 1 bis 17, d a - d u r c h   g e k e n n z e i c h n e t , daß auf der Referenzoberfläche (2) eine Mehrfachanordnung der beiden Flächenanteile (3, 4) vorgesehen ist.

19. Vorrichtung nach Anspruch 13, d a d u r c h   g e - k e n n z e i c h n e t , daß eine Zweifachanordnung der beiden Flächenanteile vorgesehen ist.

0175142

**FIG.1**

**FIG.2**

17,5nm  4  3  2

22,5nm

15nm  1
20nm  20nm  25nm

**FIG.3**

3  4  2  4  3

1

**FIG.4**

2

3

4

**FIG.5**

4  3  2

**FIG.6**

2

4

3

**FIG.7**

2

3

4

# FIG.8